# FASCICULE DE BREVET EUROPEEN

(11) **EP 4 028 201 B1**
(45) Date de publication et mention de la délivrance du brevet: **24.04.2024**
(21) Numéro de dépôt: 20765275.1
(22) Date de dépôt: 03.09.2020
(51) Int. Cl.: B23K 20/12, B23K 37/04

(54) **OUTILLAGE DE MAINTIEN D'UNE AUBE PENDANT SON SOUDAGE PAR FRICTION A UN ELEMENT ROTORIQUE D'UNE TURBOMACHINE D'AÉRONEF**
WERKZEUG ZUM HALTEN EINER SCHAUFEL WÄHREND DES REIBSCHWEISSENS DERSELBEN AN EINEM ROTORELEMENT EINER TURBOMASCHINE EINES FLUGZEUGES
TOOLING FOR RETAINING A BLADE DURING FRICTION WELDING THEREOF TO A ROTOR ELEMENT OF AN AIRCRAFT TURBOMACHINE

(30) Priorité: 10.09.2019 BE 201905599
(43) Date de publication de la demande: 20.07.2022
(73) Titulaire: Safran Aero Boosters, 4041 Herstal (BE)
(72) Inventeur: VREULS, Bruno Henri Marcel, 4041 Herstal (BE)
(74) Mandataire: Gevers Patents
(86) Numéro de dépôt international: PCT/EP2020/074659
(87) Numéro de publication internationale: WO 2021/047999

(56) Documents cités:
- EP-A1- 3 321 022
- EP-A2- 1 000 697
- JP-A- 2015 108 338

## Description

### Domaine technique

La présente invention concerne un outillage pour maintenir une aube pendant son soudage par friction à un élément rotorique d'une turbomachine d'aéronef. L'invention concerne également un procédé de soudage par friction.

### Art antérieur

Le soudage par friction est un procédé pour assembler des éléments entre eux, durant lequel de la chaleur est fournie par le frottement entre ces éléments. Lorsqu'une température suffisante est atteinte, les éléments sont assemblés sous l'action d'une pression (forgeage).

EP2535516B1 divulgue un procédé de soudage par friction d'aubes à un tambour, partie rotorique d'un compresseur d'une turbomachine d'un aéronef. Le procédé divulgué prévoit que lors de l'opération de soudage par friction, c'est l'aube qui est mise en mouvement par rapport au tambour qui reste quant à lui immobile. Ce document propose un dispositif de préhension pour maintenir l'aube pendant l'opération de friction. La préhension de l'aube lors du soudage requiert une attention particulière car elle doit supporter des efforts, axiaux et transverses, importants lors de la mise en mouvement de friction, tout en maintenant l'aube fermement et en garantissant son bon positionnement par rapport au tambour. De plus, un tel dispositif de préhension doit pouvoir être utilisé dans des zones encombrées comme par exemple entre deux aubes préalablement fixées au tambour. EP1000697 divulgue un outillage selon le préambule de la revendication 1.

La qualité de la soudure, et in fine la qualité de la turbomachine, dépendent de la robustesse et de la précision du dispositif de préhension ainsi que de sa capacité à reproduire à l'identique l'opération de soudage pour différentes aubes. Par ailleurs, il est important d'avoir un outil de préhension qui permet un temps de cycle contrôlé et modéré pour le soudage des aubes au tambour. Les inventeurs ont observé qu'il était nécessaire de trouver un autre outil de préhension, plus robuste, et dont l'encombrement est compatible avec un environnement confiné.

### Résumé de l'invention

Selon un premier aspect, un des buts de l'invention est de fournir un outillage pour tenir une aube pendant son soudage par friction à un élément rotorique, par exemple un tambour ou disque, qui est plus robuste et dont l'encombrement est compatible avec un environnement confiné. A cet effet, les inventeurs proposent un outillage pour tenir une aube pendant son soudage par friction à un élément rotorique d'une turbomachine d'aéronef, comprenant :
- un mors fixe comprenant :
   ∘ une partie centrale prévue pour être fixée à un plateau vibrant d'une machine à soudage par friction;
   ∘ deux bras essentiellement parallèles entre eux, séparés d'une distance d pour recevoir au moins une portion de ladite aube et essentiellement perpendiculaires à ladite partie centrale;
   ∘ un corps de mors fixe disposé entre les deux bras, comprenant des surfaces d'appui et un alésage pour recevoir au moins une portion de ladite aube, les surfaces d'appui étant destinées à entrer en contact avec des faces de ladite aube;
- un mors mobile apte à coulisser le long des deux bras et comprenant une surface d'appui mobile destinée à entrer en contact avec une face de ladite aube;
- des moyens de pression pour déplacer ledit mors mobile vers le corps de mors fixe pour presser de ladite aube entre le mors mobile et le corps de mors fixe.

Le transfert de mouvement, linéaire ou orbital par exemple, entre le plateau vibrant de la machine de soudage par friction et l'outillage se fait par l'intermédiaire de sa partie centrale. De préférence, la surface la plus large de la partie centrale est entièrement en contact avec le plateau vibrant. De plus, chacun parmi la partie centrale, les bras parallèles et le corps de mors fixe permet d'assurer la rigidité dans une direction de l'espace différente, assurant une excellente rigidité de l'ensemble du mors fixe dans les trois directions de l'espace. Une telle rigidité permet de minimiser les déformations de l'outillage dues à la vibration, de manière à améliorer la précision de maintien dudit outillage lors du soudage. La minimisation des déformations améliore en outre la transmission de mouvement du plateau vibrant vers l'aube à souder ce qui diminue la présence de défauts dans la soudure et en améliore donc sa qualité.

Avantageusement, les bras parallèles de l'outillage permettent au mors mobile de se déplacer par rapport au mors fixe dans une seule direction de l'espace, permettant de mieux contrôler l'action de serrage et de positionnement de l'aube à souder contre le mors fixe ce qui améliore la répétabilité de l'opération de soudage. De plus, les bras parallèles assurent l'alignement entre l'aube à souder et d'autres composants tels des aubes déjà soudés.

Avec l'outillage de l'invention, il est possible d'avoir une configuration où l'aube à souder est maintenue par l'outillage uniquement par une de des portions. Le reste de l'aube peut quant à lui être maintenu en porte-à-faux, dont une partie est confinée dans l'alésage du corps de mors fixe. L'alésage correspond à un trou traversant le corps de mors fixe, destiné à confiner sans contact une partie de l'aube à souder se trouvant entre les deux bras de l'outillage. L'aspect sans contact du confinement permet de prévenir un éventuel dégât de l'aube dû à la vibration induite durant le soudage par friction.

Lors du soudage, l'aube à souder est couplée au mors fixe selon deux directions de l'espace. La configuration du mors fixe le rend suffisamment robuste pour supporter les efforts dans ces deux directions de l'espace. Le moyen de pression permet quant à lui le serrage du mors mobile contre le mors fixe de manière à supporter les efforts dans la direction de serrage.

Préférentiellement, chacun des deux bras du mors fixe comprend une rainure. De préférence, les moyens de pression sont embarqués sur l'outillage.

Plus préférentiellement, le mors mobile comprend deux bords latéraux aptes à coulisser dans les rainures des bras. Cette configuration améliore la coopération entre le mors mobile et les bras du mors fixe. Cela permet un coulissement et un guidage efficace du mors mobile qui conserve ainsi son orientation et sa trajectoire lors de son déplacement. De plus, les bords latéraux augmentent la rigidité et la robustesse du mors mobile, lui permettant de supporter des efforts important dans la direction de serrage.

Avantageusement, le mors mobile comprend une portion de renfort essentiellement perpendiculaire audits deux bords latéraux.

Plus avantageusement, la surface d'appui mobile, les bords latéraux et la portion de renfort définissent une zone ouverte apte à recevoir une aube adjacente déjà soudée lors du soudage de l'aube à souder.

En d'autres termes, le mors mobile a de préférence une forme en « O », c'est-à-dire que le mors mobile comprend un trou traversant. Ce trou permet le passage d'une aube adjacente déjà soudée lors de l'opération de soudage de l'aube à souder. La portion de renfort permet d'assurer la tenue mécanique et la raideur du mors mobile même lorsque l'effort exercé par les moyens de pression est important.

Une telle configuration du mors mobile est résistante à la compression, rigide donc peu déformable et permet une préhension efficace de l'aube à souder tout en étant utilisable dans un espace de travail encombré par d'autres aubes déjà soudées.

Avantageusement, les moyens de pression sont aptes à être commandés par une unité de commande. Dans ce mode de réalisation, le déplacement du mors mobile, le serrage et le desserrage de l'aube à souder peuvent donc être automatisés. Cette automatisation améliore la précision et la répétabilité de la préhension de l'aube à souder par rapport à un dispositif de serrage manuel à l'aide, par exemple, de vis. Cette absence d'intervention humaine permet d'augmenter la cadence de soudage des aubes et permet également de diminuer le risque d'accident. L'unité de commande peut également être pilotée à distance par un ordinateur à l'aide d'un algorithme. Dans une version encore préférée de l'invention, l'outillage de l'invention comprend une telle unité de commande.

Préférentiellement, les moyens de pression comprennent un ou plusieurs vérins. Ces vérins peuvent être par exemple hydrauliques, pneumatiques ou électriques.

Plus préférentiellement, chaque vérin comprend un piston couplé mécaniquement audit mors mobile.

Encore plus préférentiellement, chaque bras du mors fixe est apte à accueillir un ou deux vérins, de manière à ce que la transmission de l'effort fourni par le ou lesdits vérins soit essentiellement parallèle auxdits bras. Dans une telle configuration où les moyens de pression sont embarqués sur l'outillage, la transmission de l'effort se faisant pas l'intermédiaire des pistons, les vérins peuvent donc être installés aux extrémités des bras du mors fixe, empêchant ainsi d'encombrer inutilement la zone effective de soudage.
Selon ce mode de réalisation préféré, les pistons sont localisés le long des bras du mors fixe, ainsi l'effort est strictement transmis le long de l'axe de coulissement du mors mobile. Minimiser les contraintes inutiles, *i.e.* hors dudit axe de coulissement, permet de prévenir le vieillissement prématuré de l'outillage.

Avantageusement, la surface d'appui mobile du mors mobile présente un moletage. La face de bridage étant moletée, c'est-à-dire striée, la surface d'appui mobile accroche mieux à l'aube à souder, celle-ci est donc maintenue plus fermement.

L'aube à souder comprend de préférence
- une portion d'assemblage pour être soudée audit élément rotorique;
- une plateforme;
- une partie fonctionnelle;
ladite plateforme étant située entre ladite portion d'assemblage et ladite partie fonctionnelle.

Préférentiellement, les surfaces d'appui du mors fixe sont destinées à entrer en contact avec ladite plateforme, de manière à ce que la partie fonctionnelle de l'aube soit maintenu en porte-à-faux pour éviter la transmission de vibration vers ladite partie fonctionnelle.

De préférence, l'élément rotorique est un tambour d'un compresseur basse pression d'une turbomachine d'un aéronef.

En pratique, la portion d'assemblage comprend en général une surface d'assemblage prévue pour entrer en contact avec une autre surface d'assemblage appartenant au tambour. La friction entre ces surfaces d'assemblage permet d'augmenter la température de la portion d'assemblage de l'aube de manière à la forger sur le tambour.

Préférentiellement, la plateforme de l'aube est de forme parallélépipédique. La plateforme présente alors deux faces principales parallèles sur lesquelles sont respectivement couplées la portion d'assemblage et la partie fonctionnelle. Une telle plateforme parallélépipédique présente aussi quatre faces latérales parallèles deux à deux. Chacune de ces faces latérales est prévue pour entrer en contact avec les surfaces d'appui du corps de mors fixe et la surface d'appui mobile. Ainsi, la préhension de l'objet est assurée à 360°. Plus préférentiellement, le contour défini par les faces latérales de la plateforme épouse le pourtour de la zone ouverte (ou alésage) décrite par les surfaces d'appui du corps de mors fixe afin de répartir les efforts le plus uniformément possible.

La partie fonctionnelle de l'aube correspond typiquement à une pale. La pale de l'aube est prévue pour être confinée sans contact dans l'alésage du corps de mors fixe lors de l'opération de soudage.

Un autre aspect de l'invention est de fournir un ensemble pour un procédé de soudage par friction comprenant:
- un outillage tel que décrit précédemment;
- des tenons;
- un plateau vibrant pour imprimer un mouvement de vibration audit outillage, ce dernier étant fixé au plateau vibrant à l'aide desdits tenons.
Dans cette réalisation proposée, l'interface entre l'outillage et le plateau vibrant comprend des tenons qui assurent à la fois une fonction de localisateurs et une fonction d'éléments assurant la fixation. L'utilisation de ces tenons permet un damage / déclamage rapide et automatisé de l'outillage sur le plateau vibrant.

Encore un autre aspect de l'invention est de proposer une méthode de soudage par friction d'une aube à un élément rotorique d'une turbomachine d'un aéronef, comprenant les étapes suivantes :
a. fournir un outillage selon l'invention;
b. fournir une machine de soudage par friction comprenant un plateau vibrant;
c. fixer la partie centrale de l'outillage audit plateau vibrant ;
d. disposer une portion de l'aube à souder dans l'alésage du corps de mors fixe, de manière à ce que les surfaces d'appui entrent en contact avec ladite aube;
e. mettre en contact la surface d'appui mobile du mors mobile avec ladite aube;
f. presser ladite aube entre le mors mobile et le corps de mors fixe à l'aide des moyens de pression;
g. mettre en contact ladite aube et l'élément rotorique;
h. actionner la machine de soudage par friction de manière à induire un mouvement relatif entre ladite aube et l'élément rotorique pour atteindre une température de soudage ;
i. immobiliser le plateau vibrant et presser ladite aube contre l'élément rotorique de manière à les assembler ;
j. libérer ladite aube de l'outillage.

Préférentiellement, ladite aube comprend une plateforme et l'étape (e) consiste à mettre en contact la surface d'appui du mors mobile avec ladite plateforme de ladite aube.

Préférentiellement, l'étape c. consiste à clamer la partie centrale de l'outillage audit plateau vibrant à l'aide de renons.

Ainsi, dans le cas du soudage par friction d'une aube à un tambour d'un compresseur d'une turbomachine d'aéronef, la méthode de l'invention comprend dans un premier temps la mise en place de l'aube dans l'outillage, le serrage de l'aube dans l'outillage puis la mise en contact de l'aube avec le tambour via leurs surfaces d'assemblage respectives. Idéalement, après contact les surfaces d'assemblage sont contenues dans le même plan. Dans un deuxième temps, l'aube est mise en mouvement selon une trajectoire linéaire ou, préférentiellement, orbitale, contenue dans un plan parallèle au plan des surfaces d'assemblage. Ainsi, la friction génère une élévation de température à l'interface des surfaces d'assemblage. Le tambour est maintenu immobile durant tout le processus de soudage. Le bon positionnement relatif des surfaces d'assemblage est réalisé grâce (i) à la fixation par tenons de l'outillage sur le plateau vibrant et (ii) par l'action de serrage de l'aube entre le corps de mors fixe et le mors mobile. Dans un troisième temps, lorsque la température des surfaces d'assemblage désirée est atteinte, l'aube est immobilisée, éventuellement recentrée puis pressée contre le tambour pour assembler les portions chaudes de l'aube et du tambour. Finalement, l'aube est desserrée par un relâchement du mors mobile, puis libérée par un mouvement de retrait de l'outillage. Un tel cycle de soudure peut être répété dans le but de souder une autre aube sur le tambour.

Les avantages mentionnés pour l'outillage s'appliquent mutatis mutandis à la méthode.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 montre l'outillage selon un mode de réalisation de l'invention,
- la figure 2 montre l'outillage en présence des aubes à souder, selon un mode de réalisation de l'invention,
- la figure 3 montre l'outillage, le plateau vibrant et un tambour selon un mode de réalisation de l'invention,
- la figure 4 montre une portion de tambour sur lequel est soudé une aube selon un mode de réalisation.

### Description détaillée de certains modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. Dans le contexte du présent document, les termes « premier » et « deuxième » servent uniquement à différencier les différents éléments et n'impliquent pas d'ordre entre ces éléments. Les signes de référence ne limitent pas la portée de l'invention, mais lorsqu'ils sont inclus dans les revendications. Sur les figures, des éléments identiques ou analogues peuvent porter les mêmes références.

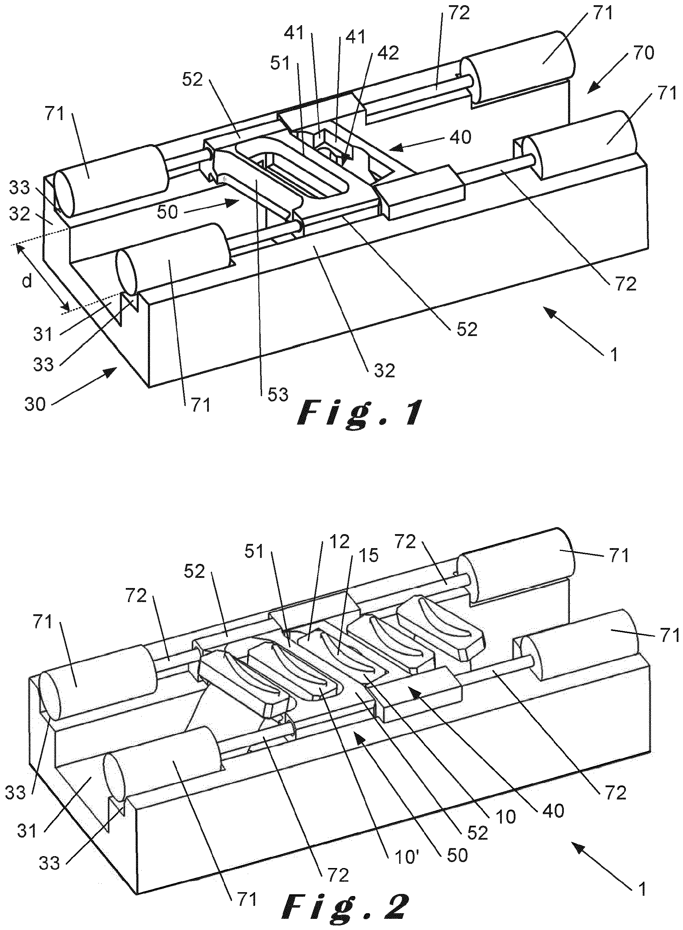

La figure 1 montre l'outillage 1 selon un mode de réalisation de l'invention. Il comprend un mors fixe 30 comprenant une partie centrale 31, deux bras 32 essentiellement parallèle entre eux et un corps de mors fixe 40.

La partie centrale 31 et les bras 32 sont agencés entre eux de manière à former un « U » selon une vue en coupe du mors fixe. Dans un mode de réalisation préféré, la distance d entre les bras 32 est plus faible que la longueur desdits bras 32, donnant un aspect allongé à l'outillage 1. Typiquement, la longueur des bras 32 est au moins le double de d. La partie centrale 31 du mors fixe peut être discontinue.

Le corps de mors fixe 40 occupe un espace entre les deux bras 32 se trouvant environ à la moitié de la longueurs desdits bras 32. Le corps de mors fixe 40 est couplé aux bras 32 par ses cotés latéraux et, possiblement, couplé à la partie centrale 31 par sa partie inférieure. Le corps de mors fixe 40 est préférentiellement disposé de manière oblique par rapport au bras 32. Le corps de mors fixe 40 présente un alésage 42. Cet alésage 42 correspond à un creux dans la profondeur du corps de mors fixe 40. L'entrée de ce creux est de préférence usinée de manière à définir des surfaces d'appui 41. Lors de l'opération de soudage d'une aube 10 sur un élément rotorique 20, l'alésage 42 est prévu pour recevoir, de préférence entièrement, la partie fonctionnelle 13 de l'aube 10. La forme de l'alésage 42 imite de préférence la forme de la partie fonctionnelle 13 de l'aube 10 de manière à minimiser la taille du creux tout en garantissant un confinement sans contact de la partie fonctionnelle 13 de l'aube 10. L'entrée de l'alésage 42 est de préférence usiné de manière à définir des surfaces d'appui 41 destinées à entrer en contact avec une partie de l'aube 10 appelée plateforme 12. De préférence, il y a trois surfaces d'appui 41 planes destinées à entrer en contact avec trois faces 14 latérales d'une plateforme 12 parallélépipédique de l'aube 10. Encore plus préférentiellement, la plateforme 12 est un parallélépipède rectangle. Ainsi dans ce mode de réalisation préféré, les surfaces d'appui 41 sont en contact avec une partie du pourtour de la plateforme 12 de l'aube 10. De plus, le plan de chaque surface d'appui 41 est de préférence perpendiculaire au plan du mouvement linéaire ou, préférentiellement, orbital du soudage par friction dans un tel cas.

De préférence, le mors mobile 50 est prévu pour pourvoir translater uniquement le long des bras 32. Dans un mode de réalisation préféré, les bras 32 comprennent des rainures 33 parallèles auxdits bras 32. Ces rainures 33 sont prévues, de préférence, pour recevoir des bords latéraux 52 du mors mobile 50 afin d'améliorer le coulissement. Le mors mobile 50 comprend une surface d'appui mobile 51, de préférence parallèle au corps de mors fixe 40 et donc oblique par rapport aux bras 32 lorsque le corps de mors fixe 40 est lui-même oblique par rapport aux bras 32. De préférence, la surface d'appui mobile 51 reste parallèle au corps de mors fixe 40 lors du coulissement du mors mobile 50. Lorsque l'aube 10 est positionnée dans le corps de mors fixe 40 (la partie fonctionnelle 13 dans l'alésage 42 et la plateforme en contact avec les surfaces d'appui 41 selon un mode de réalisation préféré), le mors mobile 50 est prévu pour se déplacer vers le corps de mors fixe 40 de manière à ce que la surface d'appui mobile 51 entre en contact avec une face 14 de la plateforme 12 de l'aube 10. Préférentiellement, l'intégralité du pourtour de la plateforme 12 est en contact soit avec la surface d'appui 41 ou la surface d'appui mobile 51. Plus préférentiellement, trois surfaces d'appui 41 planes sont destinées à entrer en contact avec trois faces 14 latérales d'une plateforme 12 parallélépipédique, ensuite la surface d'appui mobile 51, qui est plane, est destinée à entrer en contact avec la quatrième face 14 de la plateforme 12. De préférence, la surface d'appui mobile 51 est perpendiculaire au plan du mouvement linéaire ou orbital du soudage par friction. Optionnellement, la surface d'appui mobile 51 présente une texture, obtenue par usinage par exemple, permettant d'augmenter le coefficient de friction statique entre la surface d'appui mobile 51 et une face 14 de l'aube 10.

Préférentiellement, le mors mobile 50 comprend une portion de renfort 53 contigüe des deux bords latéraux 52 et de préférence perpendiculaire auxdits deux bords latéraux 52, de manière à ce que ladite portion de renfort 53 soit parallèle à la surface d'appui mobile 51.Dans cette dernière configuration, la surface d'appui mobile 51 est couplée à une extrémité des bord latéraux 52 et la portion de renfort 53 est couplée à l'autre extrémité des bords latéraux 52. Dans un tel mode de réalisation préféré, la surface d'appui mobile 51, les bords latéraux 52 et la portion de renfort 53 délimitent une ouverture dans le mors mobile 50.

L'outillage 1 de l'invention comprend des moyens de pression 70 pour déplacer le mors mobile 50 et pour presser par exemple une plateforme 12 d'une aube 10 entre le mors mobile 50 et le mors fixe 40. Les moyens de pressions 70 assurent le serrage et le desserrage de l'aube 10 dans l'outillage. Typiquement, lors de l'action de serrage d'un composant 10 à souder (aube 10 par exemple), sous l'effet des moyens de pressions 70 la surface d'appui mobile 51 exerce une force sur la plateforme 12 de l'aube 10 contre la surface d'appui 41 qui est en vis-à-vis de ladite surface d'appui mobile 51. La plateforme 12 est maintenue fermement par pincement de deux faces 14 parallèles de la plateforme12. Préférentiellement, les moyens de pression 70 sont des vérins 71 électriques, pneumatiques ou hydrauliques qui peuvent développer soit un effort directement appliqué au mors mobile 50, soit un couple qui au travers d'une vis sera transformé en un effort au mors mobile 50. Les vérins 71 sont par exemple au nombre de deux ou quatre et sont préférentiellement localisés aux extrémités des bras 32 du mors fixe 30. Les bras 32 du mors fixe 30 sont de préférence aménagés de manière à ce que les vérins 71 soient intégrés à l'outillage 1. Dans la configuration avec deux vérins 71, chacun d'eux applique un effort de part et d'autre du mors mobile 50 de manière à ce que si un vérin 71 pousse le mors mobile 50 alors l'autre vérin 71 le tire. Dans la configuration avec quatre vérins 71, ils travaillent de préférence par paire, deux qui poussent le mors mobile 50 et deux qui le tirent afin de dédoubler l'effort transmis. L'effort est transmis entre chaque vérin 71 et le mors mobile 50 au moyen d'un piston 72. Les pistons 72 sont de préférence disposés de manière à transmettre un effort strictement parallèle aux bras 32. Préférentiellement, les vérins 71 sont pilotés par une unité de commande. Cette unité de commande peut être elle-même pilotée par un algorithme de manière à automatiser la procédure de serrage et desserrage de l'aube 10 dans l'outillage 1. Ainsi, l'effort de serrage, le temps de cycle entre le serrage et desserrage et d'autres paramètres pertinents à l'opération de soudage peuvent être préprogrammés puis transmis à l'unité de commande.

La figure 2 montre l'outillage 1, selon un mode de réalisation identique à celui illustré dans la figure 1, dans lequel se trouve une aube 10 à souder et d'autres aubes 10' déjà soudées. La distance d entre les bras 32 du mors fixe 30 et la profondeur de l'outillage 1 sont suffisantes pour accueillir entièrement une aube 10. L'orientation des bras 32 de l'outillage 1 permet de contenir simultanément une pluralité d'aubes 10 alignées sur le tambour 20. La configuration de l'outillage 1 est telle que les aubes 10' déjà soudées peuvent être contenues dans l'outillage 1 sans contact avec celui-ci. L'aube 10 à souder est contenue entre le corps de mors fixe 40 et le mors mobile 50. L'aube 10' adjacente (déjà soudée) qui se trouve du côté du mors mobile 50 est préférentiellement contenue sans contact dans l'ouverture décrite par la surface d'appui mobile 51, les bords latéraux 52 et la portion de renfort 53 du mors mobile 50. Préférentiellement, la portion qui comprend la surface d'appui mobile 51 et la portion de renfort 53 ont une épaisseur identique.

Lors d'une utilisation normale de l'outillage 1 pour souder une aube 10 à un tambour 20, la plateforme 12 de l'aube 10 est de préférence parallèle à la partie centrale 31 et située à l'extrémité supérieure des bras 32 ( la partie centrale 31 étant située à l'extrémité inférieure des bras 32), la partie fonctionnelle 13 de l'aube 10 est de préférence contenue entre les bras 32 et la portion d'assemblage 15 se trouve de préférence à l'extérieure de l'outillage 1.

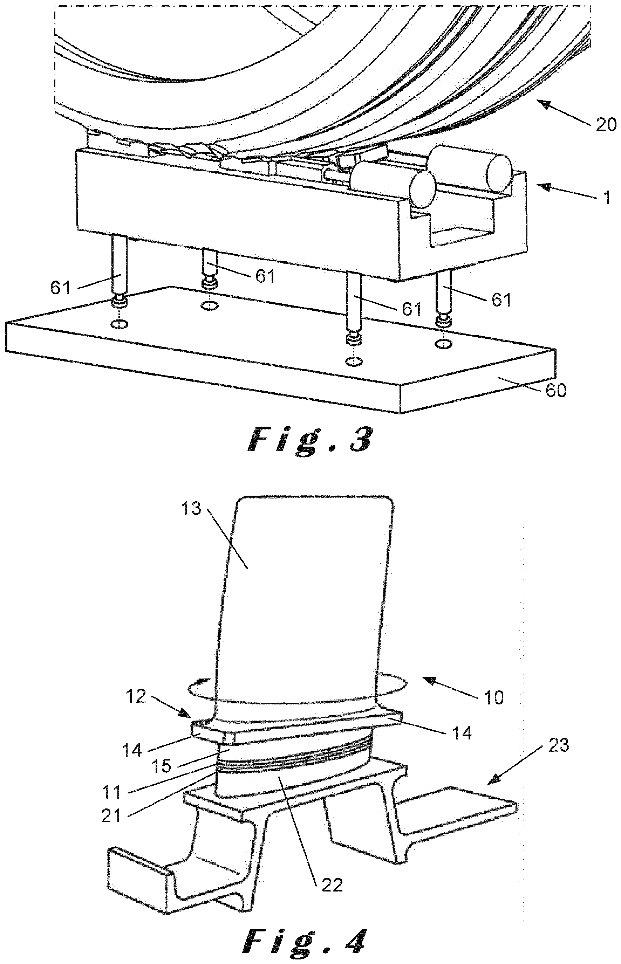

La figure 3 illustre la manière avec laquelle l'outillage 1, le plateau vibrant 60 et un tambour 20 sont agencés lors de l'opération de soudage selon un mode de réalisation préféré de l'invention. Typiquement le tambour 20 d'un compresseur basse pression d'une turbomachine est constitué d'une pluralité d'étages comprenant chacun une rangée d'aubes 10. Un étage du tambour 20 étant circulaire, les aubes 10 sont alignées le long de l'étage. Ainsi, lors de l'opération de soudage d'une aube 10 sur un étage du tambour 20, les bras 32 de l'outillage 1 sont disposés dans une direction tangentielle à l'étage du tambour 20 de manière à ce que la rangée d'aubes 10 puisse être contenue entre les bras 32. La portion d'assemblage 15 fait face au tambour 20 et la partie fonctionnelle 13 le fuit.

De préférence, l'outillage 1 est couplé au plateau vibrant 60 à l'aide de tenons 61. Les tenons 61 sont fixés à la partie inférieure de l'outillage 1, préférentiellement à la partie centrale 31, et sont prévus pour être reçus par des trous 62 dans le plateau vibrant 60 lors du couplage.

Le plateau vibrant 60 est lui-même couplé à une machine de soudage par friction. Le plateau vibrant 60 est prévu pour fournir une vibration tangentielle par rapport au tambour 20 mais il permet également d'éloigner et d'approcher l'outillage 1 du tambour 20, préférentiellement de manière automatisée. Une fois que l'aube 10 est serrée dans l'outillage 1, le plateau vibrant 60 peut rapprocher l'aube 10 du tambour 20 de manière à les mettre en contact. Lorsque le soudage est terminé et l'aube 10 desserrée, l'outillage 1 est éloigné du tambour 20 et libère l'aube 10 soudée.

La figure 4 montre une portion de tambour 20 sur lequel est soudée une aube 10 selon un mode de réalisation. La plateforme 12 sert essentiellement de moyen de préhension et de positionnement de l'aube 10 dans un plan parallèle au plan du mouvement orbital ou linéaire. Préférentiellement, la portion d'assemblage 15, qui correspond à une excroissance sous la plateforme 12 est destinée à être soudée au tambour 20. Cette portion d'assemblage 15 comprend une surface d'assemblage 11 prévue pour être mise en contact avec une surface d'assemblage 21 appartenant à une portion d'assemblage 22 du tambour 20. La portion d'assemblage 22 du tambour 20 correspond également à une excroissance de la zone de réception sur la paroi extérieure 23 du tambour 20.

En résumé, l'invention peut être décrite suit. Outillage 1 pour tenir une aube 10 pendant son soudage par friction à un élément rotorique 20 d'une turbomachine d'un aéronef et comprenant :
- un mors fixe 30 comprenant :
   ∘ une partie centrale 31;
   ∘ deux bras 32 séparés d'une distance d pour recevoir au moins une portion de ladite aube 10;
   ∘ un corps de mors fixe 40 comprenant des surfaces d'appui 41 et un alésage 42 pour recevoir au moins une portion de ladite aube 10, les surfaces d'appui 41 étant destinées à entrer en contact avec ladite aube 10;
- un mors mobile 50 comprenant une surface d'appui mobile 51 pour entrer en contact avec ladite aube 10 ;
- des moyens de pression 70 pour déplacer ledit mors mobile 50 vers le corps de mors fixe 40 pour presser ladite aube 10.

## Revendications

1. Outillage (1) pour tenir une aube (10) pendant son soudage par friction à un élément rotorique (20) d'une turbomachine d'aéronef, comprenant un mors fixe (30) comprenant :
∘ une partie centrale (31) prévue pour être fixée à un plateau vibrant (60) d'une machine à soudage par friction;
∘ deux bras (32) essentiellement parallèles entre eux, séparés d'une distance d pour recevoir au moins une portion de l'aube (10) et essentiellement perpendiculaires à ladite partie centrale (31) ;
∘ un corps de mors fixe (40) disposé entre les deux bras (32), comprenant des surfaces d'appui (41) et un alésage (42) pour recevoir au moins une portion de l'aube (10), les surfaces d'appui (41) étant destinées à entrer en contact avec des faces (14) de l'aube (10);
**caractérisé en ce qu'**il comprend :
• un mors mobile (50) apte à coulisser le long des deux bras (32) et comprenant une surface d'appui mobile (51) destinée à entrer en contact avec une face (14) de l'aube (10) ;
• des moyens de pression (70) pour déplacer ledit mors mobile (50) vers le corps de mors fixe (40) pour presser l'aube (10) entre le mors mobile (50) et le corps de mors fixe (40).

2. Outillage (1) selon la revendication précédente **caractérisé en ce que** chacun des deux bras (32) du mors fixe (30) comprend une rainure (33).

3. Outillage (1) selon la revendication précédente **caractérisé en ce que** le mors mobile (50) comprend deux bords latéraux (52) aptes à coulisser dans les rainures (33) des bras (32).

4. Outillage (1) selon la revendication précédente **caractérisé en ce que** le mors mobile (50) comprend une portion de renfort (53) essentiellement perpendiculaire audits deux bords latéraux (52).

5. Outillage (1) selon la revendication précédente **caractérisé en ce que** la surface d'appui mobile (51), les bords latéraux (52) et la portion de renfort (53) définissent une zone ouverte apte à recevoir, lors du soudage de ladite aube (10), une autre aube adjacente (10') déjà soudée.

6. Outillage (1) selon la revendication précédente **caractérisé en ce que** les moyens de pression (70) sont aptes à être commandés par une unité de commande.

7. Outillage (1) selon la revendication précédente **caractérisé en ce que** les moyens de pression (70) comprennent un ou plusieurs vérins (71).

8. Outillage (1) selon la revendication précédente **caractérisé en ce que** chaque vérin (71) comprend un piston (72) couplé mécaniquement audit mors mobile (50).

9. Outillage (1) selon la revendication précédente **caractérisé en ce que** chaque bras (32) du mors fixe (30) est apte à accueillir un ou deux vérins (71), de manière à ce que la transmission de l'effort fourni par le ou lesdits vérins soit essentiellement parallèle auxdits bras (32).

10. Outillage (1) selon l'une quelconque des revendications précédentes **caractérisé en ce que** la surface d'appui mobile (51) du mors mobile (50) présente un moletage.

11. Ensemble pour un procédé de soudage par friction comprenant :
- un outillage (1) selon l'une quelconque des revendications précédentes ;
- des tenons (61) ;
- un plateau vibrant (60) pour imprimer un mouvement de vibration audit outillage (1), ce dernier étant fixé au plateau vibrant (60) à l'aide desdits tenons (61).

12. Méthode de soudage par friction d'une aube (10) à un élément rotorique (20) d'une turbomachine d'aéronef, comprenant les étapes suivantes :
a. fournir un outillage (1) selon l'une quelconques des revendications 1 à 10 ;
b. fournir une machine de soudage par friction comprenant un plateau vibrant (60) ;
c. fixer la partie centrale (31) de l'outillage (1) audit plateau vibrant (60);
d. disposer une portion de ladite aube (10) à souder dans l'alésage (42) du corps de mors fixe (40), de manière à ce que les surfaces d'appui (41) entrent en contact avec ladite aube (10) ;
e. mettre en contact la surface d'appui mobile (51) du mors mobile (50) avec ladite aube (10) ;
f. presser ladite aube (10) entre le mors mobile (50) et le corps de mors fixe (40) à l'aide des moyens de pression (70) ;
g. mettre en contact ladite aube (10) et ledit élément rotorique (20) ;
h. actionner la machine de soudage par friction de manière à induire un mouvement relatif entre ladite aube (10) et l'élément rotorique (20) pour atteindre une température de soudage ;
i. immobiliser le plateau vibrant (60) et presser ladite aube (10) contre ledit élément rotorique (20) de manière à les assembler ;
j. libérer ladite aube de l'outillage (1).

13. Méthode selon la revendication 12 **caractérisée en ce que** le mouvement relatif entre ladite aube (10) et l'élément rotorique (20) est un mouvement orbital.

## Patentansprüche

1. Werkzeug (1) zum Halten einer Schaufel (10) während des Reibschweißens derselben an ein Rotorelement (20) einer Turbomaschine eines Flugzeugs, das eine feste Backe (30) umfasst, umfassend:
- einen Mittelteil (31), der dafür vorgesehen ist, an einer Vibrationsplatte (60) einer Reibschweißmaschine befestigt zu werden;
- zwei im Wesentlichen zueinander parallele Arme (32), die um einen Abstand d getrennt sind, um mindestens einen Abschnitt der Schaufel (10) aufzunehmen, und die im Wesentlichen senkrecht zum Mittelteil (31) sind;
- einen zwischen den zwei Armen (32) angeordneten festen Backenkörper (40), der Auflageflächen (41) und eine Bohrung (42) umfasst, um mindestens einen Abschnitt der Schaufel (10) aufzunehmen, wobei die Auflageflächen (41) dazu bestimmt sind, mit Seiten (14) der Schaufel (10) in Kontakt zu gelangen;
**dadurch gekennzeichnet, dass** es umfasst:
- eine bewegliche Backe (50), die entlang der zwei Arme (32) gleiten kann und eine bewegliche Auflagefläche (51) umfasst, die dazu bestimmt ist, mit einer Seite (14) der Schaufel (10) in Kontakt zu gelangen;
- Druckmittel (70) zum Verlagern der beweglichen Backe (50) zum festen Backenkörper (40) hin, um die Schaufel (10) zwischen der beweglichen Backe (50) und dem festen Backenkörper (40) zu pressen.

2. Werkzeug (1) nach dem vorstehenden Anspruch, **dadurch gekennzeichnet, dass** jeder der zwei Arme (32) der festen Backe (30) eine Nut (33) umfasst.

3. Werkzeug (1) nach dem vorstehenden Anspruch, **dadurch gekennzeichnet, dass** die bewegliche Backe (50) zwei Seitenkanten (52) umfasst, die in den Nuten (33) der Arme (32) gleiten können.

4. Werkzeug (1) nach dem vorstehenden Anspruch, **dadurch gekennzeichnet, dass** die bewegliche Backe (50) einen Verstärkungsabschnitt (53) umfasst, der im Wesentlichen zu den zwei Seitenkanten (52) senkrecht ist.

5. Werkzeug (1) nach dem vorstehenden Anspruch, **dadurch gekennzeichnet, dass** die bewegliche Auflagefläche (51), die Seitenkanten (52) und der Verstärkungsabschnitt (53) eine offene Zone definieren, die beim Schweißen der Schaufel (10) eine andere, bereits geschweißte angrenzende Schaufel (10') aufnehmen kann.

6. Werkzeug (1) nach dem vorstehenden Anspruch, **dadurch gekennzeichnet, dass** die Druckmittel (70) über eine Steuereinheit gesteuert werden können.

7. Werkzeug (1) nach dem vorstehenden Anspruch, **dadurch gekennzeichnet, dass** die Druckmittel (70) einen oder mehrere Zylinder (71) umfassen.

8. Werkzeug (1) nach dem vorstehenden Anspruch, **dadurch gekennzeichnet, dass** jeder Zylinder (71) einen Kolben (72) umfasst, der mechanisch mit der beweglichen Backe (50) gekoppelt ist.

9. Werkzeug (1) nach dem vorstehenden Anspruch, **dadurch gekennzeichnet, dass** jeder Arm (32) der festen Backe (30) einen oder zwei Zylinder (71) aufnehmen kann, sodass die Übertragung der von dem oder den Zylindern bereitgestellten Kraft im Wesentlichen zu den Armen (32) parallel ist.

10. Werkzeug (1) nach einem der vorstehenden Ansprüche, **dadurch gekennzeichnet, dass** die bewegliche Auflagefläche (51) der beweglichen Backe (50) eine Riffelung aufweist.

11. Anordnung für ein Reibschweißverfahren, umfassend:
- ein Werkzeug (1) nach einem der vorstehenden Ansprüche;
- Stifte (61);
- eine Vibrationsplatte (60), um dem Werkzeug (1) eine Vibrationsbewegung zu verleihen, wobei letzteres mithilfe der Stifte (61) an der Vibrationsplatte (60) befestigt ist.

12. Verfahren zum Reibschweißen einer Schaufel (10) an ein Rotorelement (20) einer Turbomaschine eines Flugzeugs, das die folgenden Schritte umfasst:
a. Bereitstellen eines Werkzeugs (1) nach einem der Ansprüche 1 bis 10;
b. Bereitstellen einer Reibschweißmaschine, die eine Vibrationsplatte (60) umfasst;
c. Befestigen des Mittelteils (31) des Werkzeugs (1) an der Vibrationsplatte (60);
d. Anordnen eines Abschnitts der zu schweißenden Schaufel (10) in der Bohrung (42) des festen Backenkörpers (40), sodass die Auflageflächen (41) mit der Schaufel (10) in Kontakt gelangen;
e. Inkontaktbringen der beweglichen Auflagefläche (51) der beweglichen Backe (50) mit der Schaufel (10);
f. Pressen der Schaufel (10) zwischen der beweglichen Backe (50) und dem festen Backenkörper (40) mit Hilfe der Druckmittel (70);
g. Inkontaktbringen der Schaufel (10) und des Rotorelements (20);
h. Betätigen der Reibschweißmaschine, um eine Relativbewegung zwischen der Schaufel (10) und dem Rotorelement (20) zu induzieren, um eine Schweißtemperatur zu erreichen;
i. Anhalten der Vibrationsplatte (60) und Pressen der Schaufel (10) an das Rotorelement (20), um sie zusammenzufügen;
j. Befreien der Schaufel aus dem Werkzeug (1).

13. Verfahren nach Anspruch 12, **dadurch gekennzeichnet, dass** die Relativbewegung zwischen der Schaufel (10) und dem Rotorelement (20) eine Kreisbewegung ist.

## Claims

1. A tooling (1) for holding a blade (10) during its friction welding to a rotor element (20) of an aircraft turbomachine, comprising a fixed jaw (30) comprising :
• a central part (31) designed to be fixed to a vibrating plate (60) of a friction welding machine;
• two arms (32) essentially parallel to each other, separated by a distance d for receiving at least a portion of the blade (10) and essentially perpendicular to said central part (31);
• a fixed jaw body (40) disposed between the two arms (32), comprising bearing surfaces (41) and a bore (42) for receiving at least a portion of the vane (10), the bearing surfaces (41) being intended to come into contact with faces (14) of the vane (10);
**characterized in that** it comprises :
- a movable jaw (50) able to slide along the two arms (32) and comprising a movable bearing surface (51) intended to come into contact with a face (14) of the blade (10);
- pressing means (70) for moving said movable jaw (50) towards the fixed jaw body (40) to press the blade (10) between the movable jaw (50) and the fixed jaw body (40).

2. The tooling (1) according to the preceding claim, wherein each of the two arms (32) of the fixed jaw (30) comprises a groove (33).

3. The tooling (1) according to the preceding claim, wherein the movable jaw (50) comprises two lateral edges (52) able to slide in the grooves (33) of the arms (32).

4. The tooling (1) according to the preceding claim, wherein the movable jaw (50) comprises a reinforcing portion (53) substantially perpendicular to said two lateral edges (52).

5. The tooling (1) according to the preceding claim, wherein the movable bearing surface (51), the lateral edges (52) and the reinforcing portion (53) define an open zone capable of receiving, during welding of said blade (10), another adjacent blade (10') already welded.

6. The tooling (1) according to the preceding claim, wherein the pressure means (70) are adapted to be controlled by a control unit.

7. The tooling (1) according to the preceding claim, wherein the pressure means (70) comprise one or more cylinders (71).

8. The tooling (1) according to the preceding claim, wherein each cylinder (71) comprises a piston (72) mechanically coupled to said movable jaw (50).

9. The tooling (1) according to the preceding claim, wherein each arm (32) of the fixed jaw (30) is able to accommodate one or two actuators (71), so that the transmission of the force supplied by said actuator(s) is essentially parallel to said arms (32).

10. The tooling (1) according to any of the preceding claims, wherein the movable bearing surface (51) of the movable jaw (50) has knurling.

11. An assembly for a friction welding process comprising :
- a tool (1) according to any of the preceding claims ;
- pins (61);
- a vibratory plate (60) for imparting a vibratory movement to said tooling (1), the latter being secured to the vibratory plate (60) by means of said pins (61).

12. A method of friction welding a blade (10) to a rotor element (20) of an aircraft turbomachine, comprising the following steps:
a. providing a tool (1) according to any one of claims 1 to 10 ;
b. providing a friction welding machine comprising a vibrating plate (60);
c. fixing the central part (31) of the tooling (1) to said vibrating plate (60);
d. place a portion of said blade (10) to be welded in the bore (42) of the fixed jaw body (40), so that the bearing surfaces (41) come into contact with said blade (10);
e. bring the movable bearing surface (51) of the movable jaw (50) into contact with said blade (10);
f. press said blade (10) between the movable jaw (50) and the fixed jaw body (40) using the pressing means (70);
g. bring said vane (10) into contact with said rotor element (20);
h. activate the friction-welding machine to induce relative movement between said vane (10) and rotor element (20) to reach a welding temperature;
i. immobilize the vibratory plate (60) and press said vane (10) against said rotor element (20) so as to join them together;
j. release said blade from the tooling (1).

13. The method according to claim 12, wherein the relative movement between said vane (10) and the rotor element (20) is an orbital movement.
